(19) Europäisches Patentamt
European Patent Office
Office européen des brevets

(11) **EP 2 802 139 B1**

(12) **EUROPEAN PATENT SPECIFICATION**

(45) Date of publication and mention
of the grant of the patent:
**12.07.2017 Bulletin 2017/28**

(51) Int Cl.:
***H04N 1/60*** *(2006.01)*   ***H04N 1/62*** *(2006.01)*

(21) Application number: **14167473.9**

(22) Date of filing: **08.05.2014**

(54) **Image color adjusting method and electronic device using the same**

Bildfarbeinstellungsverfahren und elektronische Vorrichtung damit

Procédé de réglage de couleur d'image et dispositif électronique l'utilisant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2013 US 201361821237 P**
**24.01.2014 TW 103102712**

(43) Date of publication of application:
**12.11.2014 Bulletin 2014/46**

(73) Proprietor: **ASUSTeK Computer Inc.**
**Taipei City 112 (TW)**

(72) Inventor: **Li, Shan**
**Taipei City 112 (TW)**

(74) Representative: **Becker, Eberhard**
**Patentanwälte**
**Becker, Kurig, Straus**
**Bavariastrasse 7**
**80336 München (DE)**

(56) References cited:
**US-A1- 2004 156 544     US-A1- 2006 222 242**
**US-A1- 2009 060 326     US-B1- 8 265 410**

**Description**

## BACKGROUND OF THE INVENTION

Field of the Invention

The invention relates to an image processing method, more particularly, to an image color adjusting method for an electronic device.

Description of the Related Art

As display technology develops, various electronic devices equip with an image displaying function for revealing information. A user can select an appropriate electronic device to display images according to locations, occasions or time points. For example, a handheld device, such as a tablet computer, or a home appliance, such as a television, can be used to display desire images. It is known that different electronic devices has different image qualities, therefore, various image processing methods are proposed and applied to different devices in order to get high-quality and bright-colored images.

In pursuit of high-quality images, the user can obtain bright-colored and clear images by improving the color saturation. For example, when a plurality of pixel data of the image is defined in an RGB color space, the color saturation of the image can be adjusted by adjusting a red component, a green component or a blue component of the pixel data. However, if a single color component of the image is directly adjusted or improved in the RGB color space, the image may distort, and the color may become too bright which results in a false contour effect.

US 2004/156544 A1 discloses an apparatus for performing image processing on image data including a memory color, the apparatus including: a characteristic value calculation part calculating a characteristic value from the image data; an area extraction part extracting a specific color area and its background area from the image data, using the characteristic value and the color information of the memory color stored in a storage part; a target value calculation part calculating a target value for correcting the preferable color of the specific color from the characteristic value, the extracted specific color and background areas, and the color information of the preferable color; and an image data correction part calculating a correction for correcting the preferable color based on the calculated target value and the characteristic value, and correcting a color of the specific color area based on the calculated correction and the characteristic value.

US 8 265 410 B1 discloses a system for correction and enhancement of digital images containing portraits or images of human faces by automatically detecting imperfections in an original facial image and correcting them in order to enhance the original image quality. The detected imperfections are automatically corrected by selecting a most suitable skin color using a histogram of distribution of color values on a face. A white balance and appropriate colors are set for an image. The corrected image is combined with the original image for preservations of details.

US 2009/060326 A1 discloses a method where an objective color for a target color is set based on characteristic of the target color. A correction coefficient is calculated based on lightness, chroma and hue of the target color, lightness, chroma and hue of the objective color, a distance between the most outer point and the target color in the color space, and a distance between the most outer point and the objective color in the color space.

US 2006/222242 A1 discloses an image processing apparatus executing color balance correction of an image composed of multiple pixels. The image processing apparatus comprises a representative value calculation unit and a correction processor. The representative value calculation unit calculates, based on signal values of the pixels included in a skin tone area that includes pixels indicating human skin within the image, a representative value representing hue and chroma of the pixels included in the skin tone area. The correction processor executes color balance correction of the image using execution correction amount set based on normal correction amount obtained by multiplying a difference between the representative value and an ideal value designated as a value representing ideal hue and chroma of human skin by a reduction coefficient.

## BRIEF SUMMARY OF THE INVENTION

The present invention is provided by appended claim 1. Beneficial embodiments are provided in the dependent claims.

An image color adjusting method to improve the color saturation by adjusting the color of an image in a specific color space to is provided.

An electronic device using the present disclosure method is also provided herein. After the electronic device receives pixel data of an image, it performs a color space transforming process for the pixel data via an image processing unit, and executes a color adjusting for the pixel data in the specific color space to improve and display the image in high quality.

An image color adjusting method applied to an electronic device equips an image processing function is also disclosed herein. The image color adjusting method adjusts the color of an image. The image color adjusting method includes following steps: obtaining multiple groups of first pixel data of an image in a first color space; performing a color space transforming process for the first pixel data to obtain multiple groups of second pixel data of the image in a CIELAB color space, wherein each of the second pixel data includes a luminance component L*, a first color component a* and a second color component b*; adjusting the first color component and the second color component of the second pixel data to obtain multiple groups of third pixel data, and performing a color space transforming process for the third pixel data to obtain multiple groups of fourth pixel data corresponding to the third pixel data in the first color space.

An electronic device equips an image processing function and can adjust the color of an image. The electronic device includes an image receiving unit, an image processing unit and a display screen. The image receiving unit receives an image and obtains multiple groups of first pixel data of the image in a first color space. The image processing unit is coupled to the image receiving unit and performs a color space transforming process for the first pixel data to obtain multiple groups of second pixel data of the image in a CIELAB color space. Each of the second pixel data includes a luminance component L*, a first color component a* and a second color component b*. The image processing unit applies a color adjusting model to adjust the first color component a* and the second color component b* of the second pixel data to obtain multiple groups of third pixel data, and the image processing unit performs a color space transforming process for the third pixel data to obtain multiple groups of fourth pixel data corresponding to the third pixel data in the first color space. The display screen is coupled to the image processing unit to receive and display the image including the fourth pixel data.

As stated above, in the image color adjusting method and the electronic device using the method, the pixel data of the image in other color spaces are transformed to the CIELAB color space and the color is adjusted. In the image color adjusting method, the first color component and the second color component of the pixel data in the CIELAB color space are further adjusted via the color adjusting model, so as to improve the color saturation of the image, and the adjusted pixel data are transformed back to the original color space for outputting and displaying. Consequently, the color saturation of the image is improved to make the image color brighter, and the image distortion can be avoided.

These and other features, aspects and advantages of the present invention will become better understood with regard to the following description, appended claims, and accompanying drawings.

## BRIEF DESCRIPTION OF THE DRAWINGS

FIG. 1 is a block diagram showing an electronic device in an embodiment;

FIG. 2 is a flow chart showing an image color adjusting method in an embodiment;

FIG. 3 is a flow chart showing an image color adjusting method in another embodiment; and

FIG. 4 is a schematic diagram showing a color adjusting model in an embodiment.

## DETAILED DESCRIPTION OF THE EMBODIMENTS

An image color adjusting method and an electronic device are illustrated with relating figures. The same symbols denote the same elements or components.

The image color adjusting method is applied to an electronic device equips with an image processing function for image color adjusting. Conventionally, an image includes a plurality of pixels, and thus image data include multiple groups of pixel data defined in a color space. In the image color adjusting method, a color space transforming process is performed for the pixel data, so the color of the image can be adjusted in a CIELAB color space via a color adjusting model, and the image distortion can be avoided.

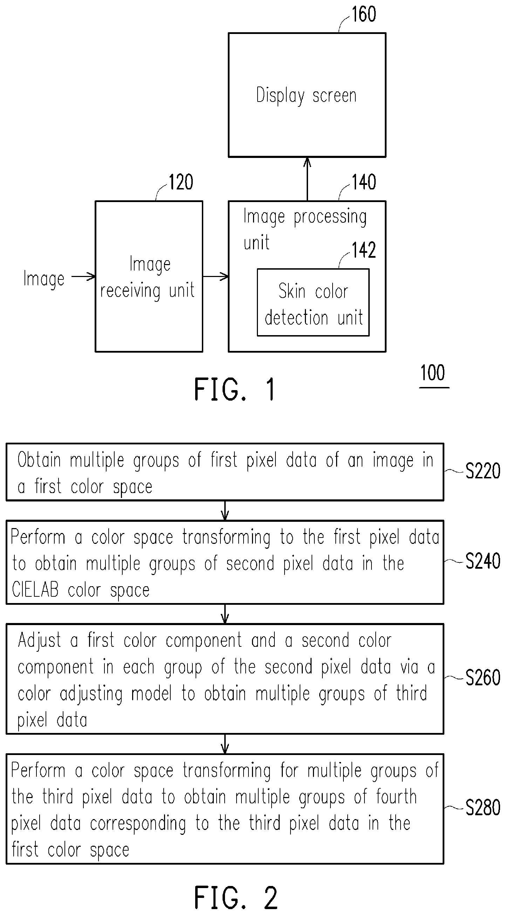

FIG. 1 is a block diagram showing an electronic device in an embodiment. Please refer to FIG. 1, the electronic device 100 includes an image receiving unit 120, an image processing unit 140 and a display screen 160. The electronic device 100 equips with an image processing function to adjust the color of the image. In detail, the image receiving unit 120 receives an image from an external device, and transfers multiple groups of pixel data of the image to the image processing unit 140. The image processing unit 140 is coupled to the image receiving unit 120, receives and processes the image. The processed image is outputted to the display screen 160 and displayed by the display screen 160. The display screen 160 may be a liquid crystal display (LCD) or a light-emitting diode (LED) display, which is not limited herein.

FIG. 2 is a flow chart showing an image color adjusting method in an embodiment. Please refer to FIG. 1 and FIG. 2, the image color adjusting method includes following steps. In step S220, the image receiving unit 120 obtains multiple groups of first pixel data of the image in a first color space. In the embodiment, the first color space is an RGB color space, and each group of the first pixel data includes a red component, a green component and a blue component, respectively. The first color space may be other types of color space, such as a CMYK color space, which is not limited herein.

In step S240, the image processing unit 140 receives multiple groups of the first pixel data, and performs a color space transforming process for the first pixel data to obtain multiple groups of second pixel data in the CIELAB color space. In the CIELAB color space, the second pixel data includes a luminance component L*, a first color component a* and a second color component b*. In detail, the luminance component L* represents the luminance of a single pixel, the first color component a* represents a bias degree of the color of a single pixel between red and green (which are opponent colors), and the second color component b* represents a bias degree of the color of a single pixel between yellow and blue (which are opponent colors). Since the CIELAB color space is visually uniform, the color adjustment is executed in the CIELAB color space, and it can correctly correspond to the color change in visual.

In the embodiment, the first color space is the RGB color space. The pixel data in the RGB color space cannot be directly transformed to the pixel data in the CIELAB color space. Thus, a transitional color space, such as a CIEXYZ color space, is needed to help transforming the first pixel data in the RGB color space to the second pixel data in the CIELAB color space. In detail, a color space transforming process is performed for the first pixel data to obtain transitional pixel data in the transitional color space, wherein the transitional pixel is corresponding to the first pixel data. Then, the color space transforming process is performed for the transitional pixel data to obtain the second pixel data in the CIELAB color space, wherein the second pixel data is corresponding to the transitional pixel data.

In step S260, the image processing unit 140 adjusts the first color component a* and the second color component b* in each group of the second pixel data via a color adjusting model to obtain multiple groups of third pixel data. In the embodiment, the color adjusting model is:

$$g(x) = p \times \frac{f(x)^t}{f(x)^\gamma + q} \quad \cdots\cdots \text{formula (1)}$$

Wherein "x" represents the first color component a* or the second color component b*, "f(x)" is a color mapping value of the first color component a* or the second color component b* mapping to a range between "0" to "1", parameters "t" and "γ" are control parameters, parameters "p" and "q" are limit parameters, and "g(x)" is a color adjusting value which generated by adjusting the color mapping value "f(x)" via the color adjusting model. In the embodiment, it is better that the limit parameters "p" and "q" are integers.

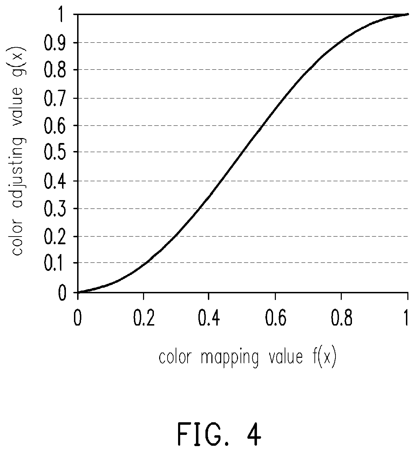

FIG. 4 is a schematic diagram showing the color adjusting model in an embodiment. Please refer to FIG. 4 and the color adjusting model (formula 1), the curve in FIG. 4 represents the corresponding relation between the color mapping value f(x) and the color adjusting value g(x) in the color adjusting model (formula 1). In other words, the curve in FIG. 4 represents the corresponding relation between the inputted first color component a*, the second color component b* and the outputted first color component a*, the second color component b*. When the first color component a* and the second color component b* of the second pixel data are adjusted via the color adjusting model (formula 1), the inputted first color component a* or the second color component b* is first mapped to a range between "0" to "1" to obtain the color mapping value f(x), and after the color adjustment, the color adjusting value g(x) is mapped back to the value range of the first color component a* or the second color component b* to obtain multiple groups of the third pixel data. The third pixel data also include a luminance component L*, a first color component a* and a second color component b*.

In the embodiment, the change of the first color component a* and the second color component b* can be adjusted correspondingly by adjusting the control parameters t, γ and the limit parameters p, q. The control parameters t and γ can determine an adjusting degree of the first color component a* and the second color component b*, and the limit parameters p and q can limit the first color component a* and the second color component b*, so as to avoid that the first color component a* and the second color component b* are increased too much and a color supersaturation occurs. In the embodiment, the control parameters "t" and "γ" preferably meet conditions of $0 \le \gamma \le 4$ and $0.99 \le t \le 1.91$, and the limit parameters "p" and "q" preferably meet conditions of $0 < p \le 2$ and $0 < q \le 1$.

In the CIELAB color space, the first color component a* represents a bias degree of the color of a single pixel between red and green (which are opponent colors), and the second color component b* represents a bias degree of the color of a single pixel between yellow and blue (which are opponent colors). Thus, in the relation shown in FIG. 4, if the inputted color mapping value f(x) is near "1", it represents that the first color component a* is reddish, or the second color component b* is yellowish. On the contrary, if the inputted color mapping value f(x) is near "0", it represents that the first color component a* is greenish, or the second color component b* is bluish. As shown in FIG. 4, the color adjusting model can adjust the bias degree of the color component between opponent colors. For example, if the inputted color mapping value f(x) is 0.8, after it is adjusted via the color adjusting model (formula 1), the outputted color adjusting value is 0.9. If "x" is the first color component a*, it represents that the first color component a* is reddish after adjustment, and if "x" is the second color component b*, it represents that the first color component b* is yellowish after adjustment.

In the CIELAB color space, the chromaticity C* is defined as follows:

$$C* = \sqrt{(a*)^2 + (b*)^2} \quad \cdots\cdots\text{formula (2)}$$

The color saturation $S_{ab}$ is defined as follows:

$$S_{ab} = \frac{C*}{L^*} \quad \cdots\cdots\text{formula (3)}$$

The first color component a* and the second color component b* in the CIELAB color space meet the conditions of $-R \leq a* \leq R$ and $-R \leq b* \leq R$, and "R" is any integer. Since the color adjusting model (formula 1) can adjust the bias degree of the color component between opponent colors, for the image (or the pixels), the image processing unit 140 can relatively increase the chromaticity C* by adjusting the control parameters "t" and "$\gamma$", and can further improve the color saturation $S_{ab}$ without affecting the luminance L*.

Please refer to FIG. 1 and FIG. 2 again, in step S280, after multiple groups of the third pixel data are obtained, the image processing unit 140 performs the color space transforming process for multiple groups of the third pixel data to obtain multiple groups of fourth pixel data corresponding to the third pixel data in the first color space . In the embodiment, the first color space is the RGB color space, and thus the fourth pixel data also include a red component, a green component and a blue component.

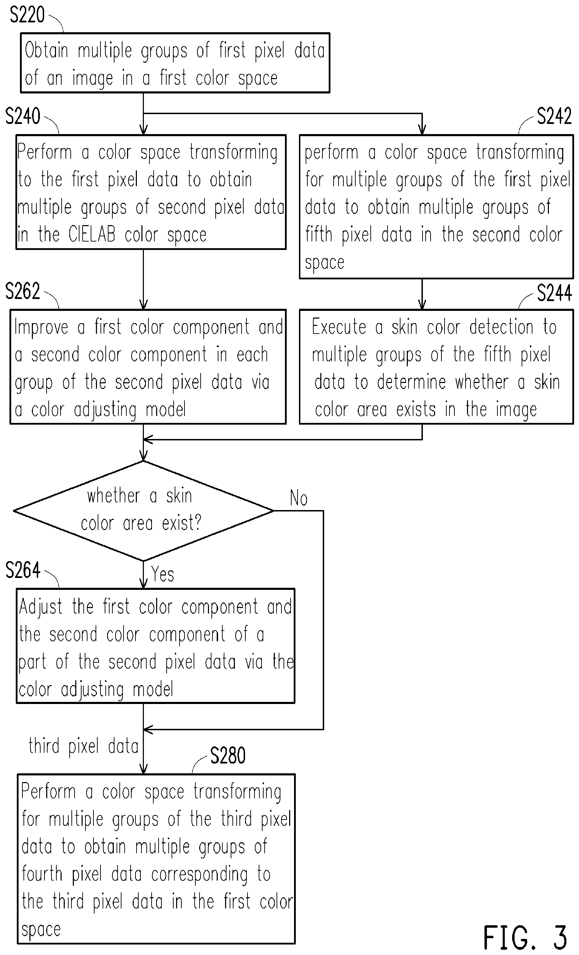

FIG. 3 is a flow chart showing an image color adjusting method in another embodiment. In the embodiment, the method of adjusting the first color component a* and the second color component b* of each group of the second pixel data via the color adjusting model (formula 1) may further be divided to two parts. One is to perform a color enhancement to the second pixel data, and the other one is to perform a color adjustment to a part of the second pixel data. Please refer to FIG. 3, in the step S240, after the color space transforming process is performed for the first pixel data to obtain multiple groups of the second pixel data in the CIELAB color space, the image processing unit 140 improves the first color component a* and the second color component b* of the second pixel data via the color adjusting model (formula 1) in the step S262. The color adjusting model (formula 1) can adjust the first color component a* and the second color component b* by adjusting the control parameters t, $\gamma$ and the limit parameters p, q, as the relation shown in FIG. 4, so as to improve the first color component a* and the second color component b* and further improve the color saturation of the second pixel data.

In the embodiment, not only a color enhancement is performed to the first pixel data and the second pixel data of the second pixel data, but also a color adjustment is performed for a skin color area of the image. If the skin color area exists in the image (which usually represents that a person exists in the image), after the color enhancement in the step S262, the image processing unit 140 further adjusts the first color component a* and the second color component b* of the second pixel data corresponding to the skin color area. Then, the display screen 160 can show the skin color area in the image more perfectly.

Please refer to FIG. 3, after multiple groups of the first pixel data in the first color space are obtained in the step S220, the image processing unit 140 further performs the color space transforming process for multiple groups of the first pixel data to obtain multiple groups of fifth pixel data in the second color space in the step S242. For example, the second color space may be an HSV color space, and each group of the fifth pixel data includes a hue component H, a saturation component S and a value component V. Then in step S244, a skin color detection is executed for multiple groups of the fifth pixel data to determine whether a skin color area exists in the image. Please refer to FIG. 1, the image processing unit 140 further includes a skin color detection unit 142 to detect the skin color area. Taking the HSV color space as an example, the skin color detection unit 142 sets the hue component H, the saturation component S and the value component V within an appropriate range, respectively, and compares the fifth pixel data with them to determine whether a skin color area exists in the image.

If the image does not include a skin color area, multiple groups of the third pixel data adjusted via the color adjusting model (formula 1) in the step S262 are obtained, and the image processing unit 140 obtains the fourth pixel data corresponding to the third pixel data in the first color space in the step S280. On the contrary, if the image includes a skin color area, the image processing unit 140 further adjusts the first color component a* and the second color component b* of a part of the second pixel data via the color adjusting model (formula 1) in the step S264, and a part of the second pixel data corresponds to the skin color area.

In detail, the skin color area can also be adjusted by adjusting the control parameters t, $\gamma$ and the limit parameters p, q in the color adjusting model (formula 1). In the step S262 and the step S264, the settings of the control parameters t, $\gamma$ and the limit parameters p, q in the color adjusting model (formula 1) are different. Compared with the color adjusting model (formula 1) used for improving the first color component a* and the second color component b* of the second pixel data in the step S262, the color adjusting model (formula 1) in the step S264 includes smaller control parameters t and $\gamma$ to reduce the color saturation of the skin color area. Finally, after the image processing unit 140 obtains the third pixel data adjusted in the step S262 and in the step S264, the fourth pixel data corresponding to the third pixel data in the first color space are obtained in the step S280.

In sum, the pixel data of an image defined in other color spaces can be transformed to the CIELAB color space via the image color adjusting method and the electronic device using the same, and the color saturation of the image can be adjusted via the color adjusting model without an image distortion or a color supersaturation. Moreover, the image color adjusting method can be used to detect whether a skin color area exists in the image, and the skin color area can be adjusted via the same color adjusting model to make the display screen show the skin color area in the image more perfectly.

### Claims

1. An image color adjusting method comprising following steps:

   obtaining first pixel data of a plurality of pixels in an image in a first color space (S220);
   performing a color space transforming process for the first pixel data to obtain second pixel data of the plurality of pixels in the image in a CIELAB color space (S240), wherein each of the second pixel data includes a luminance component L*, a first color component a* and a second color component b*;
   performing the color space transforming process to the first pixel data to obtain fifth pixel data of the plurality of pixels in the image in the second color space (S242);
   executing a skin color detection to the fifth pixel data to determine whether a skin color area exists in the image (S244);
   adjusting the first color component a* and the second color component b* of the second pixel data to obtain third pixel data of the plurality of pixels (S260), the image color adjusting method being **characterized in that** the step of adjusting the first color component a* and the second color component b* of the second pixel data includes:

      increasing the first color component a* and the second color component b* of the second pixel data to improve a color saturation of the second pixel data (S262) by a color adjusting model with a first setting of control parameters; and
      if the image includes the skin color area, adjusting the first color component a* and the second color component b* of a part of the second pixel data by the color adjusting model with a second setting of control parameters after the color saturation of the second pixel data is improved (S264), and the part of the second pixel data corresponds to the skin color area in the image; and

   performing a color space transforming process for the third pixel data to obtain fourth pixel data of the plurality of pixels corresponding to the third pixel data in the first color space (S280).

2. The image color adjusting method according to claim 1, wherein the first color space is an RGB color space, and each of the first pixel data and each of the fourth pixel data include a red component R, a green component G and a blue component B, respectively.

3. The image color adjusting method according to claim 1, wherein the color adjusting model is used to adjust the first color component a* and the second color component b* of the second pixel data, and the color adjusting model is:

$$g(x) = p \times \frac{f(x)^t}{f(x)^\gamma + q} \quad (1)$$

wherein "x" represents the first color component a* or the second color component b*, "f(x)" is a color mapping value of the first color component a* or the second color component b* mapping to a range between "0" to "1", parameters "t" and "γ" are the control parameters, parameters "p" and "q" are limit parameters, and "g(x)" is a color adjusting value which generated by adjusting the color mapping value "f(x)" via the color adjusting model.

4. The image color adjusting method according to claim 3, wherein $0 \leq \gamma \leq 4$ and $0.99 \leq t \leq 1.91$, and $0 < q \leq 1$.

5. The image color adjusting method according to claim 1, wherein the second color space is a HSV color space, and each of the fifth pixel data includes a hue component H, a saturation component S and a value component V.

6. An electronic device (100) including an image processing function, the electronic device (100) comprising:

an image receiving unit (120) receiving an image and obtaining first pixel data of a plurality of pixels in the image in a first color space;
an image processing unit (140) coupled to the image receiving unit (120) and performing a color space transforming process for the first pixel data to obtain second pixel data of the plurality of pixels in the image in a CIELAB color space, wherein each of the second pixel data includes a luminance component L*, a first color component a* and a second color component b*,
the image processing unit (140) further includes a skin color detection unit (142), the image processing unit (140) performs the color space transforming process for the first pixel data to obtain fifth pixel data of the plurality of pixels in the image in the second color space, and the skin color detection unit (142) executes a skin color detection for the fifth pixel data to determine whether a skin color area exists in the image,
the image processing unit (140) applies a color adjusting model to adjust the first color component a* and the second color component b* of the second pixel data to obtain third pixel data of the plurality of pixels, the electronic device being **characterized in that** the image processing unit (140) applies the color adjusting model with a first setting of control parameters to increase the first color component a* and the second color component b* of the second pixel data to improve a color saturation of the second pixel data, and if the image includes the skin color area, the image processing unit (140) applies the color adjusting model with a second setting of control parameters to adjust the first color component a* and the second color component b* of a part of the second pixel data after the color saturation of the second pixel data is improved, the part of the second pixel data corresponds to the skin color area in the image,
the image processing unit (140) performs a color space transforming process for the third pixel data to obtain fourth pixel data of the plurality of pixels corresponding to the third pixel data in the first color space; and
a display screen (160) coupled to the image processing unit (140) to receive and display the image including the fourth pixel data.

7. The electronic device (100) according to claim 6, wherein the first color space is an RGB color space, and each of the first pixel data and each of the fourth pixel data include a red component R, a green component G and a blue component B, respectively.

8. The electronic device (100) according to claim 7, wherein the color adjusting model is:

$$g(x) = p \times \frac{f(x)^t}{f(x)^\gamma + q} \tag{1}$$

wherein "x" represents the first color component a* or the second color component b*, "f(x)" is a color mapping value of the first color component a* or the second color component b* mapping to a range between "0" to "1", parameters "t" and "γ" are the control parameters, parameters "p" and "q" are limit parameters, and "g(x)" is a color adjusting value which generated by adjusting the color mapping value "f(x)" via the color adjusting model.

9. The electronic device (100) according to claim 8, wherein $0 \leq \gamma \leq 4$ and $0.99 \leq t \leq 1.91$, and $0 < p \leq 2$ and $0 < q \leq 1$.

10. The electronic device (100) according to claim 6, wherein the second color space is a HSV color space, and each of the fifth pixel data includes a hue component H, a saturation component S and a value component V.

**Patentansprüche**

1. Bildfarbanpassungsverfahren, die folgenden Schritte umfassend:

   Erhalten erster Pixeldaten von einer Vielzahl von Pixeln in einem Bild in einem ersten Farbraum (S220);
   Durchführen eines Farbraumumwandlungsprozesses für die ersten Pixeldaten, um zweite Pixeldaten der Vielzahl von Pixeln in dem Bild in einem CIELAB-Farbraum zu erhalten (S240), wobei jede der zweiten Pixeldaten eine Luminanzkomponente L*, eine erste Farbkomponente a* und eine zweite Farbkomponente b* enthält;
   Durchführen des Farbraumumwandlungsprozesses an den ersten Pixeldaten, um fünfte Pixeldaten der Vielzahl von Pixeln in dem Bild in dem zweiten Farbraum zu erhalten (S242);
   Ausführen eine Hautfarbenerkennung an den fünften Pixeldaten, um zu bestimmen, ob in dem Bild ein Hautfarbenbereich existiert (S244);
   Anpassen der ersten Farbkomponente a* und der zweiten Farbkomponente b* der zweiten Pixeldaten, um dritte Pixeldaten der Vielzahl von Pixeln zu erhalten (S260), wobei das Bildfarbanpassungsverfahren **dadurch gekennzeichnet ist, dass** der Schritt des Anpassens der ersten Farbkomponente a* und der zweiten Farbkomponente b* der zweiten Pixeldaten enthält:

   Erhöhen der ersten Farbkomponente a* und der zweiten Farbkomponente b* der zweiten Pixeldaten, um eine Farbsättigung der zweiten Pixeldaten zu verbessern (S262) durch ein Farbanpassungsmodell mit einer ersten Einstellung von Steuerungsparametern; und
   falls das Bild den Hautfarbenbereich enthält, Anpassen der ersten Farbkomponente a* und der zweiten Farbkomponente b* eines Teils der zweiten Pixeldaten durch das Farbanpassungsmodell mit einer zweiten Einstellung von Steuerungsparametern, nachdem die Farbsättigung der zweiten Pixeldaten verbessert wurde (S264), und der Teil der zweiten Pixeldaten dem Hautfarbenbereich in dem Bild entspricht; und
   Durchführen eines Farbraumumwandlungsprozesses für die dritten Pixeldaten, um vierte Pixeldaten der Vielzahl von Pixeln zu erhalten, entsprechend den dritten Pixeldaten in dem ersten Farbraum (S280).

2. Bildfarbanpassungsverfahren gemäß Anspruch 1, wobei der erste Farbraum ein RGB-Farbraum ist und jede der ersten Pixeldaten und jede der vierten Pixeldaten jeweils eine rote Komponente R, eine grüne Komponente G und eine blaue Komponente B enthalten.

3. Bildfarbanpassungsverfahren gemäß Anspruch 1, wobei das Farbanpassungsmodell verwendet wird, um die erste Farbkomponente a* und die zweite Farbkomponente b* der zweiten Pixeldaten anzupassen und das Farbanpassungsmodell ist:

$$g(x) = p \times \frac{f(x)^t}{f(x)^\gamma + q} \quad (1)$$

   wobei "x" die erste Farbkomponente a* oder die zweite Farbkomponente b* repräsentiert, "f(x)" ein Farbabbildungswert der ersten Farbkomponente a* oder der zweiten Farbkomponente b* ist, der auf einen Bereich zwischen "0" und "1" abbildet, Parameter "t" und "γ" die Steuerungsparameter sind, Parameter "p" und "q" Grenzparameter sind und "g(x)" ein Farbanpassungswert ist, der durch Anpassen des Farbabbildungswerts "f(x)" über das Farbanpassungsmodell erzeugt wird.

4. Bildfarbanpassungsverfahren gemäß Anspruch 3, wobei $0 \leq \gamma \leq 4$ und $0{,}99 \leq t \leq 1{,}91$, und $0 < p \leq 2$ und $0 < q \leq 1$ ist.

5. Bildfarbanpassungsverfahren gemäß Anspruch 1, wobei der zweite Farbraum ein HSV-Farbraum ist und jede der fünften Pixeldaten eine Farbtonkomponente H, eine Sättigungskomponente S und eine Wertkomponente V enthält.

6. Elektronische Vorrichtung (100), die eine Bildverarbeitungsfunktion enthält, wobei die elektronische Vorrichtung (100) umfasst:

   eine Bildempfangseinheit (120), die ein Bild empfängt und erste Pixeldaten einer Vielzahl von Pixeln in dem Bild in einem ersten Farbraum erhält;
   eine Bildverarbeitungseinheit (140), die mit der Bildempfangseinheit (120) gekoppelt ist und einen Farbraumumwandlungsprozess für die ersten Pixeldaten durchführt, um zweite Pixeldaten der Vielzahl von Pixeln in dem Bild in einem CIELAB-Farbraum zu erhalten, wobei jede der zweiten Pixeldaten eine Luminanzkomponente L*, einer erste Farbkomponente a* und eine zweite Farbkomponente b* enthält,

wobei die Bildverarbeitungseinheit (140) weiterhin eine Hautfarbenerkennungseinheit (142) enthält, wobei die Bildverarbeitungseinheit (140) den Farbraumumwandlungsprozess an den ersten Pixeldaten durchführt, um fünfte Pixeldaten der Vielzahl von Pixeln in dem Bild in dem zweiten Farbraum zu erhalten und die Hautfarbenerkennungseinheit (142) eine Hautfarbenerkennung an den fünften Pixeldaten ausführt, um zu bestimmen, ob in dem Bild ein Hautfarbenbereich existiert,

wobei die Bildverarbeitungseinheit (140) ein Farbanpassungsmodell anwendet zum Anpassen der ersten Farbkomponente a* und der zweiten Farbkomponente b* der zweiten Pixeldaten, um dritte Pixeldaten der Vielzahl von Pixeln zu erhalten, wobei die elektronische Vorrichtung **dadurch gekennzeichnet ist, dass** die Bildverarbeitungseinheit (140) das Farbanpassungsmodell mit einer ersten Einstellung von Steuerungsparametern anwendet, um die erste Farbkomponente a* und die zweite Farbkomponente b* der zweiten Pixeldaten zu erhöhen, um eine Farbsättigung der zweiten Pixeldaten zu verbessern und, falls das Bild den Hautfarbenbereich enthält, wendet die Bildverarbeitungseinheit (140) das Farbanpassungsmodell mit einer zweiten Einstellung von Steuerungsparametern an, um die erste Farbkomponente a* und die zweite Farbkomponente b* eines Teils der zweiten Pixeldaten anzupassen, nachdem die Farbsättigung der zweiten Pixeldaten verbessert wurde, wobei der Teil der zweiten Pixeldaten dem Hautfarbenbereich in dem Bild entspricht,

die Bildverarbeitungseinheit (140) einen Farbraumumwandlungsprozess für die dritten Pixeldaten durchführt, um vierte Pixeldaten der Vielzahl von Pixeln zu erhalten, entsprechend den dritten Pixeldaten in dem ersten Farbraum; und

einen Anzeigeschirm (160), der mit der Bildverarbeitungseinheit (140) gekoppelt ist, um das Bild einschließlich der vierten Pixeldaten zu empfangen und anzuzeigen.

7. Elektronische Vorrichtung (100) gemäß Anspruch 6, wobei der erste Farbraum ein RGB-Farbraum ist und jede der ersten Pixeldaten und jede der vierten Pixeldaten jeweils eine rote Komponente R, eine grüne Komponente G und eine blaue Komponente B enthalten.

8. Elektronische Vorrichtung (100) gemäß Anspruch 7, wobei das Farbanpassungsmodell ist:

$$g(x) = p \times \frac{f(x)^t}{f(x)^\gamma + q} \quad (1)$$

wobei "x" die erste Farbkomponente a* oder die zweite Farbkomponente b* repräsentiert, "f(x)" ein Farbabbildungswert der ersten Farbkomponente a* oder der zweiten Farbkomponente b* ist, der auf einen Bereich zwischen "0" und "1" abbildet, Parameter "t" und "γ" die Steuerungsparameter sind, Parameter "p" und "q" Grenzparameter sind und "g(x)" ein Farbanpassungswert ist, der durch Anpassen des Farbabbildungswerts "f(x)" über das Farbanpassungsmodell erzeugt wird.

9. Elektronische Vorrichtung (100) gemäß Anspruch 8, wobei $0 \leq\, \leq \gamma \leq 4$ und $0{,}99 \leq t \leq 1{,}91$, und $0 < p \leq 2$ und $0 < q \leq 1$ ist.

10. Elektronische Vorrichtung (100) gemäß Anspruch 6, wobei der zweite Farbraum ein HSV-Farbraum ist und jede der fünften Pixeldaten eine Farbtonkomponente H, eine Sättigungskomponente S und eine Wertkomponente V enthält.

**Revendications**

1. Procédé de réglage de couleurs d'image comprenant les étapes suivantes :

l'obtention de premières données de pixel d'une pluralité de pixels dans une image dans un premier espace de couleurs (S220) ;

la réalisation d'un processus de transformation d'espace de couleurs pour les premières données de pixel pour obtenir des deuxièmes données de pixel de la pluralité des pixels dans l'image dans un espace de couleurs CIELAB (S240), dans lequel chacune des deuxièmes données de pixel comprend une composante de luminance L*, une première composante de couleur a* et une deuxième composante de couleur b* ;
la réalisation du processus de transformation d'espace de couleurs pour les premières données de pixel pour obtenir des cinquièmes données de pixel de la pluralité des pixels dans l'image dans le deuxième espace de couleurs (S242) ;
l'exécution d'une détection de couleur de peau pour les cinquièmes données de pixel pour déterminer si une zone de couleur de peau existe dans l'image (S244) ;
le réglage de la première composante de couleur a* et de la deuxième composante de couleur b* des deuxièmes données de pixel pour obtenir des troisièmes données de pixel de la pluralité des pixels (S260), le procédé de réglage de couleurs d'image **se caractérisant en ce que** l'étape de réglage de la première composante de couleur a* et de la deuxième composante de couleur b* des deuxièmes données de pixel comprend :

l'intensification de la première composante de couleur a* et de la deuxième composante de couleur b* des deuxièmes données de pixel pour améliorer une saturation des couleurs des deuxièmes données de pixel (S262) grâce à un modèle de réglage de couleurs avec un premier ajustement de paramètres de contrôle ; et si l'image comprend la zone de couleur de peau, le réglage de la première composante de couleur a* et de la deuxième composante de couleur b* d'une partie des deuxièmes données de pixel grâce au modèle de réglage des couleurs avec un deuxième ajustement de paramètres de contrôle une fois que la saturation des couleurs des deuxièmes données de pixel est améliorée (S264), et la partie des deuxièmes données de pixel correspondant à la zone de couleur de peau dans l'image ; et
la réalisation d'un processus de transformation d'espace de couleurs pour les troisièmes données de pixel pour obtenir des quatrièmes données de pixel de la pluralité des pixels correspondant aux troisièmes données de pixel dans le premier espace de couleurs (S280).

2.  Procédé de réglage de couleurs d'image selon la revendication 1, dans lequel le premier espace de couleurs est un espace de couleurs RVB, et chacune des premières données de pixel et chacune des quatrièmes données de pixel comprenant respectivement une composante rouge R, une composante verte V, et une composante bleue B.

3.  Procédé de réglage de couleurs d'image selon la revendication 1, dans lequel le modèle de réglage de couleurs est utilisé pour régler la première composante de couleur a* et la deuxième composante de couleur b* des deuxièmes données de pixel, et le modèle de réglage de couleurs étant :

$$g(x) = p \times \frac{f(x)^t}{f(x)^\gamma + q} \tag{1}$$

dans lequel « x » représente la première composante de couleur a* ou la deuxième composante de couleur b*, « f(x) » étant une valeur de mappage de couleurs de la première composante de couleur a* ou de la deuxième composante de couleur b* assurant le mappage à une plage comprise entre « 0 » et « 1 », les paramètres « t » et « γ » étant les paramètres de contrôle, les paramètres « p » et « q » étant des paramètres de limite, et « g(x) » étant une valeur de réglage de couleur générée en réglant la valeur de mappage de couleurs « f(x) » via le modèle de réglage de couleurs.

4.  Procédé de réglage de couleurs d'image selon la revendication 3, dans lequel $0 \le \gamma \le 4$ et $0{,}99 \le t \le 1{,}91$, et $0 < p \le 2$ et $0 < q \le 1$.

5.  Procédé de réglage de couleurs d'image selon la revendication 1, dans lequel le deuxième espace de couleurs est un espace de couleurs TSV, et chacune des cinquièmes données de pixel comprenant une composante de teinte T, une composante de saturation S, et une composante de valeur V.

6.  Dispositif électronique (100) comprenant une fonction de traitement d'image, le dispositif électronique (100) comprenant :

une unité de réception d'image (120) recevant une image et obtenant des premières données de pixel d'une pluralité de pixels dans l'image dans un premier espace de couleurs ;
une unité de traitement d'image (140) couplée à l'unité de réception d'image (120) et effectuant un processus de transformation d'espace de couleurs pour les premières données de pixel pour obtenir des deuxièmes données de pixel de la pluralité des pixels dans l'image dans un espace de couleurs CIELAB, dans lequel chacune des deuxièmes données de pixel comprend une composante de luminance L*, une première composante de couleur a* et une deuxième composante de couleur b*,

l'unité de traitement d'image (140) comprenant en outre une unité de détection de couleur de peau (142), l'unité de traitement d'image (140) effectuant le processus de transformation d'espace de couleurs pour les premières données de pixel pour obtenir des cinquièmes données de pixel de la pluralité des pixels dans l'image dans le deuxième espace de couleurs, et l'unité de détection de couleur de peau (142) exécutant une détection de couleur de peau pour les cinquièmes données de pixel pour déterminer si une zone de couleur de peau existe dans l'image,

l'unité de traitement d'image (140) appliquant un modèle de réglage de couleurs pour régler la première composante de couleur a* et la deuxième composante de couleur b* des deuxièmes données de pixel pour obtenir des troisièmes données de pixel de la pluralité des pixels, le dispositif électronique **se caractérisant en ce que** l'unité de traitement d'image (140) applique le modèle de réglage de couleurs avec un premier ajustement de paramètres de contrôle pour intensifier la première composante de couleur a* et la deuxième composante de couleur b* des deuxièmes données de pixel pour améliorer une saturation des couleurs des deuxièmes données de pixel, et si l'image comprend la zone de couleur de peau, l'unité de traitement d'image (140) appliquant le modèle de réglage de couleurs avec un deuxième ajustement des paramètres de contrôle pour régler la première composante de couleur a* et la deuxième composante de couleur b* d'une partie des deuxièmes données de pixel une fois que la saturation des couleurs des deuxièmes données de pixel est améliorée, la partie des deuxièmes données de pixel correspondant à la zone de couleur de peau dans l'image,

l'unité de traitement d'image (140) effectuant un processus de transformation d'espace de couleurs pour les troisièmes données de pixel pour obtenir des quatrièmes données de pixel de la pluralité des pixels correspondant aux troisièmes données de pixel dans le premier espace de couleurs ; et

un écran d'affichage (160) couplé à l'unité de traitement d'image (140) pour recevoir et afficher l'image comprenant les quatrièmes données de pixel.

7. Dispositif électronique (100) selon la revendication 6, dans lequel le premier espace de couleurs est un espace de couleurs RVB, et chacune des premières données de pixel et chacune des quatrièmes données de pixel comprenant respectivement une composante rouge R, une composante verte V, et une composante bleue B.

8. Dispositif électronique (100) selon la revendication 7, dans lequel le modèle de réglage de couleurs est :

$$g(x) = p \times \frac{f(x)^t}{f(x)^\gamma + q} \tag{1}$$

dans lequel « x » représente la première composante de couleur a* ou la deuxième composante de couleur b*, « f(x) » étant une valeur de mappage de couleurs de la première composante de couleur a* ou de la deuxième composante de couleur b* assurant le mappage à une plage comprise entre « 0 » et « 1 », les paramètres « t » et « γ » étant les paramètres de contrôle, les paramètres « p » et « q » étant des paramètres de limite, et « g(x) » étant une valeur de réglage de couleur générée en réglant la valeur de mappage de couleurs « f(x) » via le modèle de réglage de couleurs.

9. Dispositif électronique (100) selon la revendication 8, dans lequel $0 \leq \gamma \leq 4$ et $0,99 \leq t \leq 1,91$, et $0 < p \leq 2$ et $0 < q \leq 1$.

10. Dispositif électronique (100) selon la revendication 6, dans lequel le deuxième espace de couleurs est un espace de couleurs TSV, et chacune des cinquièmes données de pixel comprenant une composante de teinte T, une composante de saturation S, et une composante de valeur V.

160

Display screen

120

Image receiving unit

Image →

140

Image processing unit

142

Skin color detection unit

## FIG. 1

100

Obtain multiple groups of first pixel data of an image in a first color space — S220

Perform a color space transforming to the first pixel data to obtain multiple groups of second pixel data in the CIELAB color space — S240

Adjust a first color component and a second color component in each group of the second pixel data via a color adjusting model to obtain multiple groups of third pixel data — S260

Perform a color space transforming for multiple groups of the third pixel data to obtain multiple groups of fourth pixel data corresponding to the third pixel data in the first color space — S280

## FIG. 2

S220

Obtain multiple groups of first pixel data of an image in a first color space

S240

Perform a color space transforming to the first pixel data to obtain multiple groups of second pixel data in the CIELAB color space

S242

perform a color space transforming for multiple groups of the first pixel data to obtain multiple groups of fifth pixel data in the second color space

S262

Improve a first color component and a second color component in each group of the second pixel data via a color adjusting model

S244

Execute a skin color detection to multiple groups of the fifth pixel data to determine whether a skin color area exists in the image

whether a skin color area exist?

No

S264

Yes

Adjust the first color component and the second color component of a part of the second pixel data via the color adjusting model

third pixel data

S280

Perform a color space transforming for multiple groups of the third pixel data to obtain multiple groups of fourth pixel data corresponding to the third pixel data in the first color space

FIG. 3

FIG. 4

**EP 2 802 139 B1**

## REFERENCES CITED IN THE DESCRIPTION

**Patent documents cited in the description**

- US 2004156544 A1
- US 8265410 B1
- US 2009060326 A1
- US 2006222242 A1